(19) Europäisches Patentamt
European Patent Office
Office européen des brevets

(11) **EP 4 648 351 A1**

(12) **EUROPEAN PATENT APPLICATION**
published in accordance with Art. 153(4) EPC

(43) Date of publication:
**12.11.2025 Bulletin 2025/46**

(21) Application number: **23914995.8**

(22) Date of filing: **26.12.2023**

(51) International Patent Classification (IPC):
*H04L 9/00* (2022.01)  *H04L 9/08* (2006.01)
*H04L 9/30* (2006.01)  *G06F 7/544* (2006.01)
*G06F 7/72* (2006.01)

(52) Cooperative Patent Classification (CPC):
**G06F 7/544; G06F 7/72; H04L 9/00; H04L 9/08;
H04L 9/30**

(86) International application number:
**PCT/KR2023/021556**

(87) International publication number:
**WO 2024/147535 (11.07.2024 Gazette 2024/28)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **02.01.2023 KR 20230000447
06.01.2023 KR 20230002513
11.12.2023 KR 20230178274**

(71) Applicant: **CRYPTO LAB INC.
Gwanak-gu, Seoul 08826 (KR)**

(72) Inventor: **BAE, Youngjin
Seoul 08826 (KR)**

(74) Representative: **Dragotti & Associati S.P.A.
Via Nino Bixio, 7
20129 Milano (IT)**

(54) **METHOD AND ELECTRONIC DEVICE FOR PROCESSING HOMOMORPHIC CIPHERTEXT**

(57)    A ciphertext processing method is disclosed. The present ciphertext processing method comprises the steps of: setting a ring, which is a set in which addition and multiplication are defined between elements; calculating a secret key, which is a Galois subgroup of the ring and belongs to a subring that satisfies a preset condition; calculating a public key corresponding to the calculated secret key; and applying the public key to a message to generate a homomorphic ciphertext.

## FIG. 6

**Description**

[Technical Field]

The present disclosure relates to a method and an electronic device for processing a homomorphic ciphertext, and more particularly, to a method and an electronic device for processing a homomorphic ciphertext by accelerating a linear operation using a Galois subgroup.

[Background Art]

As communication technology develops and the spread of electronic devices becomes more active, efforts have been continuously made to maintain communication security between the electronic devices. Accordingly, encryption/-decryption technology has been used in most communication environments.

If a message encrypted by the encryption technology is transmitted to the other party, the other party is required to perform decryption to use the message. In this case, the other party may waste resources and time in a process of decrypting encrypted data. In addition, the message may be easily leaked to a third party if the third party hacks the message while the other party temporarily decrypts the message for operation.

To solve these problems, homomorphic encryption methods have been studied. Homomorphic encryption may acquire the same result as an encrypted value acquired after performing an operation on a plaintext, even if the operation is performed on a ciphertext itself acquired without decrypting encrypted information. Therefore, various operations may be performed without decrypting the ciphertext.

However, a plaintext space within a homomorphic ciphertext may be reduced in case of performing a homomorphic operation such as homomorphic multiplication, and the operation may no longer be performed if the plaintext space is reduced to a certain size or less. In this regard, a bootstrapping method for expanding the plaintext space in the homomorphic ciphertext has been recently used.

The bootstrapping method or the like may use a linear transformation process. However, the linear transformation process requires a lot of time resources. Therefore, there is a need for a method for reducing an operational speed or an operational resource in the linear transformation process or the like.

[Disclosure]

[Technical Problem]

The present disclosure provides a method and an electronic device for processing a homomorphic ciphertext by accelerating a linear operation using a Galois subgroup.

[Technical Solution]

According to an embodiment of the present disclosure, provided is method for processing a ciphertext, the method including: setting a ring, which is a set in which addition and multiplication are defined between elements; calculating a secret key corresponding to a subring that belongs to a Galois subgroup of the ring and satisfies a predetermined condition; calculating a public key corresponding to the calculated secret key; and generating the homomorphic ciphertext by applying the public key to the message.

The predetermined condition may be expressed as $O_K^H$, where H indicates the Galois subgroup, K indicates $Q(\zeta)$ (*where* $\zeta = e^{2\pi j/(N)}$), and N indicates a degree of the ring.

The method may further include switching the secret key of the homomorphic ciphertext to another secret key.

In the switching of the secret key, the key switching may be performed on the secret key of the homomorphic ciphertext to a second secret key satisfying $O_K$ if a modulus of the homomorphic ciphertext is greater than or equal to a predetermined value, and the key switching may be performed on the secret key of the homomorphic ciphertext to a third secret key satisfying $O_K^H$ if the modulus of the homomorphic ciphertext is less than the predetermined value.

The method may further include: performing an operation on the homomorphic ciphertext; and expanding a plaintext space in the homomorphic ciphertext on which the operation is performed, wherein the expanding of the plaintext space includes expanding a modulus of the homomorphic ciphertext on which the operation is performed, performing a first linear transformation on the homomorphic ciphertext whose modulus is expanded into a polynomial form, switching the secret key of the homomorphic ciphertext transformed into the polynomial form to another secret key, performing an approximation operation on the homomorphic ciphertext whose secret key is switched, and performing a second linear transformation on the homomorphic ciphertext, on which the approximation operation is performed, into a ciphertext form.

In the switching of the secret key, a first secret key of the homomorphic ciphertext, on which the first linear transformation is performed, may be switched to the second secret key corresponding to the subring and corresponding to a size of the modulus.

The expanding of the plaintext space may further include switching the second secret key of the homomorphic ciphertext, on which the second linear transformation is performed, to the first secret key.

According to an embodiment of the present disclosure, provided is an electronic device including: a memory for storing a message; and a processor configured to generate a homomorphic ciphertext corresponding to the message, wherein the processor is configured to set a ring, which is a set in which addition and multiplication are defined between elements, calculate a secret key corresponding to a subring that belongs to a Galois subgroup of the ring and satisfies a predetermined condition, calculate a public key corresponding to the calculated secret key, and generate a homomorphic ciphertext by applying the public key to the message.

The predetermined condition may be expressed as $O_K^H$, where H indicates the Galois subgroup, K indicates $Q(\zeta)$ (where $\zeta = e^{2\pi j/(N)}$), and N indicates a degree of the ring.

The processor may be configured to switch the secret key of the homomorphic ciphertext to another secret key.

The processor may be configured to perform the key switching on the secret key of the homomorphic ciphertext to a second secret key satisfying $O_K$ if a modulus of the homomorphic ciphertext is greater than or equal to a predetermined value, and perform the key switching on the secret key of the homomorphic ciphertext to a third secret key satisfying $O_K^H$ if the modulus of the homomorphic ciphertext is less than the predetermined value.

The processor may be configured to perform an operation on the homomorphic ciphertext, expand a modulus of the homomorphic ciphertext on which the operation is performed, perform a first linear transformation on the homomorphic ciphertext whose modulus is expanded into a polynomial form, switch the secret key of the homomorphic ciphertext transformed into the polynomial form to another secret key, perform an approximation operation on the homomorphic ciphertext whose secret key is switched, and perform a second linear transformation on the homomorphic ciphertext, on which the approximation operation is performed, into a ciphertext form.

The processor may be configured to switch a first secret key of the homomorphic ciphertext, on which the first linear transformation is performed, to the second secret key corresponding to the subring and corresponding to a size of the modulus.

The processor may be configured to switch the second secret key of the homomorphic ciphertext, on which the second linear transformation is performed, to the first secret key.

According to an embodiment of the present disclosure, provided is computer-readable recording medium including a program for executing a method for processing a ciphertext, wherein the method includes setting a ring, which is a set in which addition and multiplication are defined between elements, calculating a secret key corresponding to a subring that belongs to a Galois subgroup of the ring and satisfies a predetermined condition, calculating a public key corresponding to the calculated secret key, and generating the homomorphic ciphertext by applying the public key to the message.

[Advantageous Effects]

According to the various embodiments of the present disclosure, the key switching may be minimized during the linear transformation by using the secret key satisfying the subring that is invariant with respect to Galois subgroup, and the low time resources may be reduced even if the key switching is required.

[Description of Drawings]

FIG. 1 is a diagram for describing a structure of a network system according to an embodiment of the present disclosure;

FIG. 2 is a block diagram showing a brief configuration of an electronic device according to an embodiment of the present disclosure;

FIG. 3 is a block diagram showing a detailed configuration of the electronic device according to an embodiment of the present disclosure;

FIG. 4 is a diagram for describing operations of generating a public key and a secret key;

FIG. 5 is a diagram for describing generation and decryption operations on an approximate homomorphic ciphertext;

FIG. 6 is a diagram for describing a bootstrapping operation according to the present disclosure;

FIG. 7 is a flowchart for describing an encryption method according to the present disclosure;
FIG. 8 is a flowchart for describing the bootstrapping operation according to the present disclosure; and
FIG. 9 is a flowchart for describing an operation for expanding a plaintext space according to the present disclosure.

[Best Mode]

Hereinafter, the present disclosure is described in detail with reference to the accompanying drawings. Encryption/decryption may be applied as necessary to a process of transmitting information (or data) that is performed in the present disclosure, and an expression describing the process of transmitting the information (or data) in the present disclosure and the claims should be interpreted as including all cases of the encryption/decryption even if not separately mentioned. In the disclosure, an expression such as "transmission (transfer) from A to B" or "reception from A to B" may include transmission (transfer) or reception while having another medium included in the middle, and may not necessarily express only the direct transmission (transfer) or reception from A to B.

In describing the present disclosure, a sequence of each operation should be understood as non-restrictive unless a preceding operation in the sequence of each operation needs to logically and temporally precede a subsequent operation. That is, except for the above exceptional case, the essence of the present disclosure is not affected even if a process described as the subsequent operation is performed before a process described as the preceding operation, and the scope of the present disclosure should also be defined regardless of the sequences of the operations. In addition, in this specification, "A or B" may be defined to indicate not only selectively indicating either A or B, but also including both A and B. In addition, a term "including" in the present disclosure may encompass the meaning of further including other components in addition to components listed as being included.

The disclosure only describes essential components necessary for describing the disclosure, and does not mention components unrelated to the essence of the disclosure. In addition, it should not be interpreted as an exclusive meaning that the disclosure includes only the mentioned components, and should be interpreted as a non-exclusive meaning that the disclosure may include other components as well.

In addition, in the present disclosure, a "value" may be defined as a concept that includes a vector as well as a scalar value. In addition, in the present disclosure, an expression such as "calculate" or "compute" may be replaced with an expression that refers to generating a result of the corresponding calculation or computation. In addition, unless otherwise indicated, an operation on a ciphertext described below refers to a homomorphic operation. For example, addition on homomorphic ciphertexts indicates homomorphic addition on two homomorphic ciphertexts.

Mathematical operations and calculations in each step of the disclosure described below may be implemented as computer operations by a known coding method and/or coding designed to be suitable for the disclosure to perform the corresponding operations or calculations.

Specific equations described below are illustratively provided among possible alternatives, and the scope of the disclosure should not be construed as being limited to the equations mentioned in the present disclosure.

For convenience of description, the disclosure defines the following notations:

$a \leftarrow D$: Select an element $a$ based on distribution D.
$s1, s2 \in R$: Each of S1 and S2 is an element belonging to a set R.
$\mathrm{mod}(q)$: Perform modular operation with an element $q$.

$\lfloor \cdot \rceil$ : Round an internal value.

Hereinafter, various embodiments of the disclosure are described in detail with reference to the accompanying drawings.

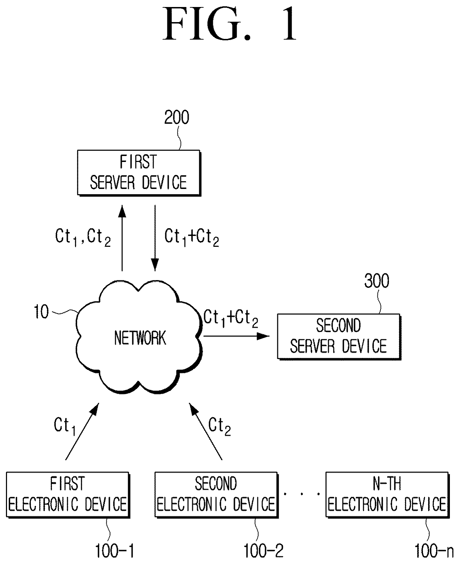

FIG. 1 is a diagram for describing a structure of a network system according to an embodiment of the present disclosure.

Referring to FIG. 1, the network system may include a plurality of electronic devices 100-1 to 100-n, a first server device 200, and a second server device 300, and the respective components may be connected to each other via a network 10.

The network 10 may be implemented as any of various forms of wired/wireless communication networks, a broadcast communication network, an optical communication network, a cloud communication network, or the like, and the respective devices may be connected to each other without a separate medium, such as wireless fidelity (Wi-Fi), Bluetooth, or near field communication (NFC).

FIG. 1 shows the plurality of electronic devices 100-1 to 100-n. However, the plurality of electronic devices are not necessarily required to be used, and a single device may be used instead. As an example, the electronic devices 100-1 to 100-n may be implemented in various forms of devices such as smartphones, tablets, game players, personal computers (PCs), laptop PCs, home servers, or kiosks, and may also be implemented in the form of home appliances using internet of things (IoT) functions.

A user may input various information by using the electronic devices 100-1 to 100-n that the user uses. The input information may be stored in the electronic devices 100-1 to 100-n themselves, or may also be transmitted to and stored in an external device for reasons such as storage capacity and security. As shown in FIG. 1, the first server device 200 may serve to store such information, and the second server device 300 may serve to use some or all of the information stored in the first server device 200.

Each of the electronic devices 100-1 to 100-n may homomorphically encrypt the input information and transmit a homomorphic ciphertext to the first server device 200.

Each of the electronic devices 100-1 to 100-n may include an error, i.e., encryption noise calculated in a process of performing homomorphic encryption, in the ciphertext. In detail, the homomorphic ciphertext generated by each of the electronic devices 100-1 to 100-n may be generated in a form in which a result value including a message and an error value is restored if decrypted later using a secret key.

As an example, the homomorphic ciphertext generated by each of the electronic devices 100-1 to 100-n may be generated in a form that satisfies the following property if decrypted using the secret key.

$$[\text{Equation 1}]$$

$$\text{Dec}(ct, sk) = <ct, sk> = M+e \pmod{q}$$

Here, < and > indicate dot product operation (or usual inner product), ct indicates the ciphertext, sk indicates the secret key, M indicates a plaintext message, e indicates the encryption error value, and mod q indicates a modulus of the ciphertext. q needs to be selected to be larger than a result value M multiplied by a scaling factor $\Delta$ to the message. If an absolute value of the error value e is sufficiently smaller than M, a decryption value M+e of the ciphertext may be a value that may replace an original message by the same precision in significant figure operation. Among decrypted data, the error may be disposed on the least significant bit (LSB) side, and M may be disposed on the next least significant bit side.

If a size of the message is too small or too large, the size may be adjusted using the scaling factor. If the scaling factor is used, not only a message in an integer form but also a message in a real number form may be encrypted, and its usability may thus be greatly increased. In addition, the size of the message may be adjusted using the scaling factor to thus also adjust a size of an effective region, that is, a region where the messages exist in the ciphertext after the operation is performed.

In some embodiments, the modulus q of the ciphertext may be set and used in various forms. As an example, the modulus of the ciphertext may be set in a form of an exponential power $q=\Delta^L$ of the scaling factor $\Delta$. If $\Delta$ is 2, the modulus may be set to a value such as $q=2^{10}$.

In addition, the homomorphic ciphertext according to the disclosure is described assuming that a fixed point is used. However, the homomorphic ciphertext may also be applied even in case of using a floating point.

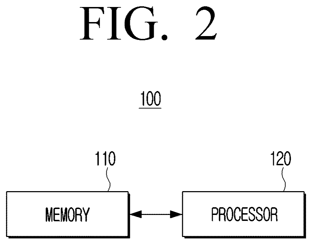

Meanwhile, the homomorphic ciphertext according to the present disclosure may be encrypted using the secret key that is invariant with respect to a Galois subgroup. This configuration is described below with reference to FIG. 2.

The first server device 200 may store the received homomorphic ciphertext in a ciphertext state without decrypting the ciphertext. Meanwhile, the first server device 200 may store not only the homomorphic ciphertext encrypted using a single scheme, but also the homomorphic ciphertext encrypted using various schemes.

In this case, the first server device 200 may perform the homomorphic operation by performing a transformation operation (or generalizing operation) on the homomorphic ciphertext encrypted using different schemes. For example, if a first scheme is a scheme using rank 1 and dimension N, the first server device 200 may expand the rank and transform the ciphertext into a ring learning with errors (RLWE) ciphertext having rank k and dimension N. On the other hand, if a second scheme is a scheme using rank K and dimension 1, the first server device 200 may expand the dimension and transform the ciphertext into the RLWE ciphertext having rank k and dimension N. Meanwhile, the transformation operation may also be referred to as a key switching operation. However, hereinafter, the transformation described above may be referred to as multi-secret switching to distinguish this key switching operation from a key switching operation described below that is performed on the same dimension and rank.

In addition, the first server device 200 may perform the key switching on the homomorphic ciphertext to operate on homomorphic ciphertexts decrypted using different secret keys together. Here, the key switching is an operation of switching the secret key used to decrypt the homomorphic ciphertext to another secret key.

Such a key switching operation may also enable the homomorphic operation task to be performed on homomorphic ciphertexts having different secret keys. For example, if there are a first homomorphic ciphertext decrypted using a first secret key and a second homomorphic ciphertext decrypted using a second secret key, the first server device 200 may perform an operational process by key-switching the secret key of the second homomorphic ciphertext to the first secret key, or by key-switching each of the first homomorphic ciphertext and the second homomorphic ciphertext to a new third secret key.

The second server device 300 may request a specific processing result for the homomorphic ciphertext from the first server device 200. The first server device 200 may perform a specific operation based on the request from the second server device 300 and then transmit the result to the second server device 300.

As an example, if ciphertexts ct1 and ct2 transmitted from two electronic devices 100-1 and 100-2 are stored in the first server device 200, the second server device 300 may request the first server device 200 for a value acquired by summing information provided by the two electronic devices 100-1 and 100-2. The first server device 200 may perform an operation for summing the two ciphertexts based on the request and then transmit a result value ct1 + ct2 to the second server device 300.

Due to a property of the homomorphic ciphertext, the first server device 200 may perform the operation without decrypting the ciphertext, and the result value may also be generated in a ciphertext form. In the present disclosure, the result value acquired from the operation is referred to as an operational result ciphertext.

The first server device 200 may transmit the operational result ciphertext to the second server device 300. The second server device 300 may decrypt the received operational result ciphertext to thus acquire the operation result value of data included in each homomorphic ciphertext.

The first server device 200 may perform the operation multiple times based on a user request. In this case, an approximate message weight in the operational result ciphertext acquired for each operation may be changed. The first server device 200 may perform a bootstrapping operation if the approximate message weight exceeds a threshold. In this way, the first server device 200 may perform the operational process and, therefore, may also be referred to as an operation device.

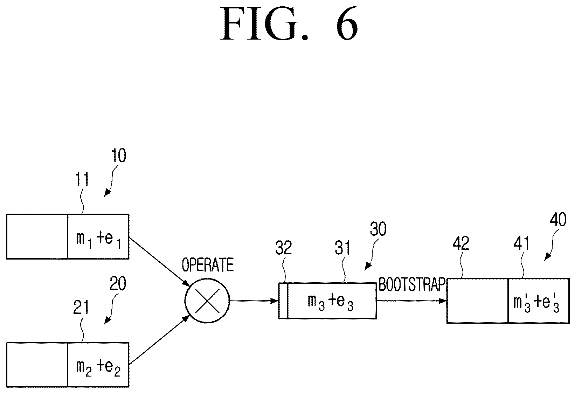

In detail, in Equation 1 above, if q is smaller than M, M+e(mod q) has a different value from M+e, thus making the decryption impossible. Therefore, a value of q needs to always be maintained larger than M. However, the value of q may be gradually decreased as the operation progresses. Therefore, an operation is needed to change the value of q to ensure that the value of q always remains greater than M, and this operation is referred to as the bootstrapping operation. As the bootstrapping operation is performed, the ciphertext may be made available for the operation again. A detailed operation of the bootstrapping is described below with reference to FIG. 6.

Meanwhile, the bootstrapping operation may include an operation (EvalMod) that applies an approximation algorithm, and the approximation algorithm may perform many rotation operations. However, such a rotation operation requires a lot of operational resources, and the present disclosure thus uses a special secret key to save the operational resources. This configuration is described with reference to FIG. 2.

Meanwhile, FIG. 1 shows a case where the first electronic device and the second electronic device perform the encryption, and the second server device performs the decryption. However, the present disclosure is not necessarily limited thereto.

FIG. 2 is a block diagram showing a brief configuration of the electronic device according to an embodiment of the present disclosure.

Referring to FIG. 2, the electronic device 100 may include a memory 110 and a processor 120.

The memory 110 is a component for storing various instructions and/or software, data, or the like related to the generation and processing for operation of the homomorphic ciphertext described below or an operating system (O/S) for driving the electronic device 100. The memory 110 may be implemented in any of various forms such as a random-access memory (RAM), a read-only memory (ROM), a flash memory, a hard disk drive (HDD), an external memory, or a memory card, and is not limited to any one thereof.

The memory 110 may store the message to be encrypted. Here, the message may include various credit information, personal information, or the like quoted by the user, and may also be information related to a usage history, such as location information, internet usage time information, or the like used by the electronic device 100.

In addition, the memory 110 may store a public key. If the electronic device 100 is a device that directly generates the public key, the electronic device 100 may store not only the secret key, but also various parameters required for generating the public key and the secret key.

In addition, the memory 110 may store the homomorphic ciphertext generated in a process described below.

The processor 120 may control each component of the electronic device 100. The processor 120 may be configured as a single device, such as a central processing unit (CPU) or an application-specific integrated circuit (ASIC), or may be configured as a plurality of devices, such as central processing units (CPUs) and graphics processing units (GPUs).

The processor 120 may store the message to be transmitted in the memory 110 if the corresponding message is input. The processor 120 may homomorphically encrypt the message by using various set values and programs stored in the memory 110. In this case, the public key may be used.

The processor 120 may generate and use the public key required to perform the encryption on its own, or may receive the public key from the external device and use the same. As an example, the second server device 300 performing the decryption may distribute the public key to other devices.

If the processor 120 generates the key on its own, the processor 120 may generate the public key by using a Ring-LWE scheme. To describe in detail, the processor 120 may first set the various parameters and rings and store the same in the memory 110. An example of the parameter may include a length of plaintext message bits, dimension k, rank k, a size of the public key or the secret key, or the like. The homomorphic ciphertext may have various formats, and the processor 120 may set the ring based on a ciphertext method according to a method set by the user or a predetermined method. For example, the homomorphic ciphertext method described above may be Cheon-Kim-Kim-Song (CKKS) scheme or the RLWE scheme.

The ring may be expressed by the following equation.

[Equation 2]

$$R = Z_q[X]/f(x)$$

Here, R indicates the ring, $Z_q$ indicates a coefficient, and f(x) indicates an N-th polynomial.

The Ring indicates a set of polynomials having predetermined coefficients, and indicates the set in which addition and multiplication are defined between elements and which is closed under the addition and multiplication. The Ring may be referred to as the ring.

As an example, the ring indicates a set of the N-th polynomials having the coefficient $Z_q$. In detail, if n is $\Phi(N)$, N indicates a polynomial which may be calculated as the remainder of dividing the polynomial by an N-th cyclotomic polynomial. (f(x)) indicates ideal of $Z_q[x]$ generated by f(x). The Euler totient function $\Phi(N)$ indicates the number of natural numbers that are coprime to N and smaller than N. If $\Phi N(x)$ is defined by the N-th cyclotomic polynomial, the ring may also be expressed by Equation 3 below.

[Equation 3]

$$R = Z_q[X]/\Phi_N(x)$$

In addition, the ring used in the present disclosure may be used as the Galois subgroup.

If $\Phi_{\hat{N}}(X)$ is a $\hat{N}$-th degree (order) cyclotomic polynomial $\phi(\hat{N})$, $K=Q(\zeta)$(where $\zeta=e^{2\pi j(N)}$) and $O_K=Z[\zeta]$ may be referred to as a "ring of integers" of K.

For a subgroup H of Gal(K/Q) = G, $O_K^H = r \in O_K : hr = r \, \forall h \in H$ is a subring of $O_K$. In addition, K indicates the size of a rank or slot.

That is, if $\hat{N} = 2N$ and N is a power of 2, G = <p, u>. Here, p indicates a rotation by 1 and u indicates a conjugation (i.e., from viewpoint of the slot in the CKKS scheme). For example, if $\hat{N}= 2N$ and N is a power of 2, the ring may be expressed by Equation 4 below.

[Equation 4]

$$R_{q,N} = Z_q[X]/(X^N+1) = O_K/qO_K$$

If the ring is set, the processor 120 may calculate a secret key sk from the ring.

[Equation 5]

```
sk ← (1, s(x)), s(x) ∈ R
```

Here, s(x) indicates a random polynomial generated using a small coefficient.

Here, the processor 120 may select the secret key corresponding to a subring that belongs to the Galois subgroup of the above-mentioned ring and satisfies a predetermined condition.

Here, the predetermined condition may be expressed by Equation 6.

[Equation 6]

$$O_K^H$$

In this way, a Galois action in H on the polynomial of the message may be taken without switching the key in case of selecting the secret key having a subring structure that is invariant with respect to the Galois subgroup.

For example, in case of using a usual CKKS scheme, it is assumed that a rotation by N/4 is referred to as $p_{N/4}$ and the subgroup H = {1, $p_{N/4}$} of G.

The RLWE ciphertext having dimension N may be expressed as $(A,B)=(A,-As+M)$. The ciphertext may be expressed as $(A^{p_{N/4}},B^{p_{N/4}})=(A^{p_{N/4}},-A^{p_{N/4}}s+M^{p_{N/4}})$ if $\rho_{N/4}$ is taken for both A and B in case of $S\in(R_{q,N})^H$. It may thus be seen that the rotation by N/4 is possible without the key switching.

Compared to a case where the secret key is $S\in R_{q,N}$, the ciphertext may be expressed as $(A^{p_{N/4}},B^{p_{N/4}})=(A^{p_{N/4}},-A^{p_{N/4}}S^{p_{N/4}}+M^{p_{N/4}})$. It may thus be seen that the key switching of $S^{p_{N/4}}\to S$ is required.

The stability of such an operation is described.

As described above, selecting the secret key to satisfy Equation 6 may guarantee the stability. The stability may be slightly reduced, while rotation, conjugation, or the like may be performed without switching. However, some operations may guarantee the security. The security may be guaranteed because only the dimension of a ring having the same

$subring O_K^H$ is isomorphic with a lower ring, especially if a ring having a power-of-two dimension in the CKKS scheme is used as a base. The dimension of a ring in the RLWE scheme may be proportional to the size of an available modulus, which indicates that the ciphertext encrypted using the secret key corresponding to the subring may be secure for a low-modulus ciphertext.

Considering this point, the operation may be performed on a high-modulus ciphertext in its encrypted state by using the secret key corresponding to a full ring $O_K$, and the operation may be performed using a key satisfying $O_K^H$ through the key switching if the modulus of the ciphertext drops sufficiently. Here, the key switching indicates an operation of switching the secret key of the homomorphic ciphertext to another key without performing a decryption process on the homomorphic ciphertext.

If the ring and the secret key are selected, the processor 120 may calculate a first random polynomial (a(x)) from the ring. The first random polynomial may be expressed as follows.

[Equation 7]

$$a(x) \leftarrow R$$

In addition, the processor 120 may calculate the error. In detail, the processor 120 may extract the error from a discrete Gaussian distribution or a distribution having a statistical distance close thereto. This error may be expressed as follows.

[Equation 8]

$$e(x) \leftarrow Dn\alpha q$$

If even the error is calculated, the processor 120 may calculate a second random polynomial by performing a modular operation on the error in the first random polynomial and the secret key. The second random polynomial may be expressed as follows.

[Equation 9]

$$b(x) = -a(x)s(x) + e(x) \pmod q$$

Finally, a public key pk may be set to include the first random polynomial and the second random polynomial as follows.

[Equation 10]

$$pk = (b(x), a(x))$$

The above-described key generation method is only an example, the present disclosure is not necessarily limited thereto, and the public key and the secret key may also be generated using another method.

In addition, the processor 120 may generate a homomorphic ciphertext for the message. In detail, the processor 120 may generate the homomorphic ciphertext by applying a previously generated public key to the message. Here, the processor 120 may generate a length of the ciphertext to correspond to a size of the scaling factor.

In addition, if the homomorphic ciphertext is generated, the processor 120 may store the homomorphic ciphertext in the memory 110 or control the communication device 130 to transmit the homomorphic ciphertext to another device based on a user request or a predetermined default command.

Meanwhile, according to an embodiment of the present disclosure, packing may be performed. If the packing is used in the homomorphic encryption, the plurality of messages may be encrypted as a single ciphertext. In this case, if the electronic device 100 performs the operations between the respective ciphertexts, the operations on the plurality of messages may be processed in parallel, thereby greatly reducing an operation burden.

In detail, if the message includes a plurality of message vectors, the processor 120 may transform the plurality of message vectors into a polynomial for encrypting the plurality of message vectors in parallel, then multiply the polynomial by the scaling factor, and use the public key to perform the homomorphic encryption. Accordingly, the processor 120 may generate the ciphertext in which the plurality of message vectors are packed.

In addition, if the homomorphic ciphertext is required to be decrypted, the processor 120 may apply the secret key to the homomorphic ciphertext to generate a decrypted text in a polynomial form and decode the decrypted text in the polynomial form to generate the message. Here, the generated message may include the error as mentioned in Equation 1 described above.

In addition, the processor 120 may perform the operation on the ciphertext. In detail, the processor 120 may perform an operation such as addition or multiplication on the homomorphic ciphertext while maintaining its encrypted state. In detail, the processor 120 may process each of the homomorphic ciphertexts to be used in the operation by using a first function, perform the operation such as addition or multiplication between the homomorphic ciphertexts processed using the first function, and process the homomorphic ciphertexts, on which the operation is performed, by using a second function, which is the inverse function of the first function. The first-function processing and the second-function processing may use linear transformation technology in a bootstrapping process described below.

Meanwhile, the processor 120 may transform the homomorphic ciphertext. For example, if there are various forms of homomorphic ciphertexts, the operations are unable to be performed together because the ciphertexts have different dimensions or different ranks. Therefore, the processor 120 may transform the input homomorphic ciphertext or the homomorphic ciphertext to be processed for operation into an RLWE ciphertext having dimension N, an RLWE ciphertext having rank K, or an RLWE ciphertext having dimension N and rank K to cover all dimensions and all ranks, and perform the processing for operation by using the transformed ciphertext.

Such an operation may be referred to as the linear transformation of the ciphertext or key switching to a multi-secret RLWE ciphertext. For example, the processor 120 may set RLWE (A, B = -AS + M) having dimension Nk to

$$A = \sum_{j=0}^{k-1} \widetilde{a_j} X^j$$ . The processor 120 may acquire $$AS = \sum_{j=0}^{k-1} \widetilde{a_j} S X^j$$ if the key switching is performed using the multi-secret switching key $SWK_j = \widetilde{\alpha_j}, \widetilde{\alpha_j} \sum + P \cdot S \cdot X^j$ , which is in a format of the multi-secret RLWE ciphertext, thereby acquiring the multi-secret RLWE ciphertext from a key switching result.

Meanwhile, if the operation is completed, the processor 120 may detect data in the effective region from operational result data. In detail, the processor 120 may perform rounding processing on the operational result data to detect the data in the effective region. The rounding processing indicates rounding off the message while the message is encrypted, and may alternatively be referred to as rescaling.

In detail, the processor 120 may remove a noise region by multiplying each component of the ciphertext by $\Delta^{-1}$, which is an inverse of the scaling factor, and rounding off the same. The noise region may be determined to correspond to the size of the scaling factor. As a result, the processor 120 may detect the message in the effective region excluding the noise region. The rounding processing may be performed while the message is encrypted, an additional error may thus occur. However, a size of the error may be sufficiently small and thus ignored.

In addition, the processor 120 may perform the bootstrapping operation on the ciphertext if the approximate message weight in the operational result ciphertext exceeds the threshold. In detail, the processor 120 may generate the homomorphic ciphertext whose plaintext space is expanded by expanding a modulus of the operational result ciphertext, performing a first linear transformation on the homomorphic ciphertext whose modulus is expanded into the polynomial form, performing an approximation operation on the first homomorphic ciphertext, which is transformed into the polynomial form, by using a function set to approximate a modulated range of a plaintext, performing a second linear transformation on the second homomorphic ciphertext, on which the approximation operation is performed, into a homomorphic ciphertext form, and performing a subtraction operation by subtracting the second homomorphic ciphertext, on which the second linear transformation is performed, from the homomorphic ciphertext whose modulus is expanded.

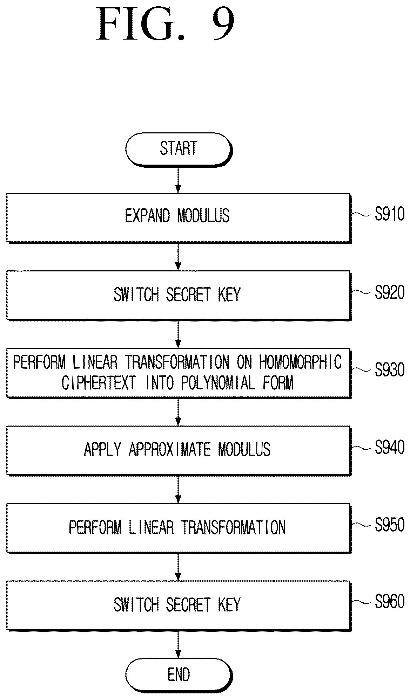

It may be advantageous to perform the linear transformation described above if the subring that is invariant with respect to the Galois subgroup as described above is used also in the bootstrapping process, and an operational speed may be improved by additionally performing some operations during the linear transformation described above. This operation is described below with reference with FIGS. 6 and 9.

As described above, the electronic device 100 according to an embodiment of the present disclosure may use the secret key using the subring structure that is invariant with respect to the Galois subgroup, thus improving the operational speed during the linear transformation.

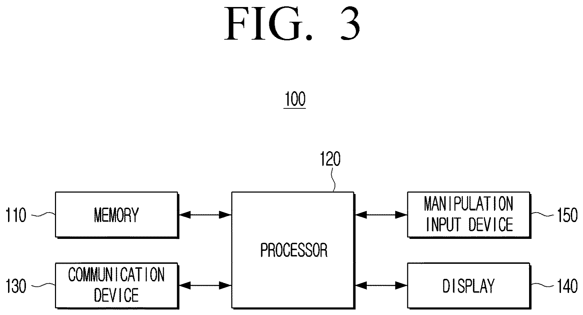

Meanwhile, only the brief components included in the electronic device 100 are shown and described hereinabove. However, in implementation, the electronic device 100 may include various additional components. A description of this configuration is provided below with reference to FIG. 3.

FIG. 3 is a block diagram showing a detailed configuration of the electronic device according to an embodiment of the present disclosure.

Referring to FIG. 3, the electronic device 100 according to the present disclosure may include the memory 110, the processor 120, a communication device 130, a display 140, and a manipulation input device 150.

The description describes the memory 110 with reference to FIG. 2, and thus omits its redundant description. In addition, the description also describes the processor 120 with reference to FIG. 2, and omits its contents provided with reference to FIG. 2, and only describes its functions added in FIG. 3.

The communication device 130 may connect the electronic device 100 to the external device (not shown), and may be connected to the external device not only via a local area network (LAN) or the internet, but also via a universal serial bus (USB) port or a wireless communication port (e.g., Wi-Fi 802.11a/b/g/n, NFC, or Bluetooth). The communication device 130 may also be referred to as a transceiver.

The communication device 130 may receive the public key from the external device, and transmit the public key generated by the electronic device 100 to the external device.

In addition, the communication device 130 may receive the message from the external device, and transmit the generated homomorphic ciphertext to the external device.

In addition, the communication device 130 may receive various parameters required for generating the ciphertext from the external device. Meanwhile, in implementation, the various parameters may be directly input from the user through the manipulation input device 150 described below.

The display 140 may display a user interface window for selection of functions supported by the electronic device 100. In detail, the display 140 may display the user interface window for the selection of various functions provided by the electronic device 100. The display 140 may be a monitor such as a liquid crystal display (LCD), a cathode ray tube (CRT), or an organic light-emitting diode (OLED), and may also be implemented as a touchscreen capable of simultaneously performing a function of the manipulation input device 150 described below.

The display 140 may display a message requesting input of the parameter required for generating the secret key or the public key. In addition, the display 140 may display a message for selecting a message which is an encryption target. Meanwhile, in implementation, the encryption target may be selected directly by the user or automatically selected. That is, the personal information or the like that requires the encryption may be set automatically even if the user does not directly select the message.

The manipulation input device 150 may receive a function selection command and a control command for a corresponding function of the electronic device 100 from the user. In detail, the manipulation input device 150 may receive the parameter required for generating the secret key or the public key from the user. In addition, the manipulation input device 150 may receive the message to be encrypted from the user.

If the processor 120 receives the parameters required for generating the secret key or the public key from the user, the processor 120 may generate a setting parameter based on the received parameter, and generate the secret key or the public key based on the generated setting parameter.

In addition, if it is necessary to generate the ciphertext for the message, the processor 120 may generate the homomorphic ciphertext by applying the public key to the message. In detail, the processor 120 may generate the homomorphic ciphertext by transforming the message into the polynomial form and applying the public key to the message transformed into the polynomial form.

In addition, if it is necessary to decrypt the homomorphic ciphertext, the processor 120 may apply the secret key to the homomorphic ciphertext to thus generate the decrypted text in the polynomial form, and decode the decrypted text in the polynomial form to thus generate the message. Here, the generated message may include the error as mentioned in Equation 1 described above.

In addition, if it is necessary to perform the operation on the homomorphic ciphertext, the processor 120 may perform the addition or multiplication operation on the plurality of homomorphic ciphertexts requested by the user.

As described above, the electronic device 100 according to this embodiment may generate the homomorphic ciphertext for the message, thus improving the stability of the message even if the operation is required. In addition, the generated homomorphic ciphertext may include the error, thus maintaining stable security even for biometric information or the like that requires high security.

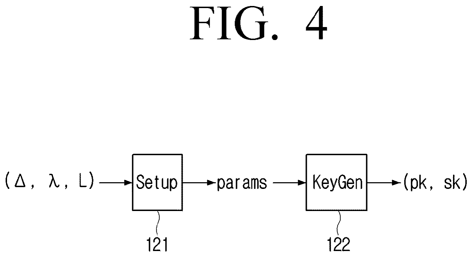

FIG. 4 is a diagram for describing the operations of generating the public key and the secret key.

Referring to FIG. 4, a setup module 121 may receive the scaling factor $\Delta$, a security parameter $\lambda$, and a level parameter L from the user. Here, the scaling factor $\Delta$ is a parameter that adjusts the size of the message and may be greater than 1. In addition, the security parameter $\lambda$ is an indicator of how stable the scheme is, and may be referred to as computation complexity. In addition, the level parameter is an indicator of a depth at which the operation is supported.

The setup module 121, which receives the parameters as described above, may set the moduli, randomly select an integer n and a positive number P, and output a set parameter $(n,(q_i)_{1 \leq i \leq L},P,\Delta)$.

A key generation module 122 may receive the set parameter generated by the setup module 121, and generate the secret key and the public key based on the received set parameters.

In detail, the key generation module 122 may calculate the secret key and the error. Here, the key generation module 122 may generate the secret key satisfying Equation 6 described above.

In addition, the key generation module 122 may generate a first random polynomial and a second random polynomial.

In addition, the key generation module 122 may use the generated parameter, the first random polynomial, and the second random polynomial to thus generate the public key and the secret key.

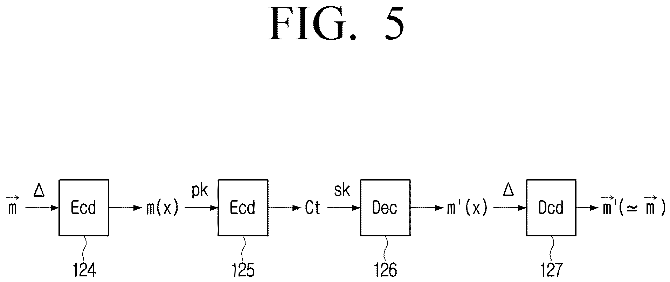

FIG. 5 is a diagram for describing generation and decryption operations on an approximate homomorphic ciphertext.

Referring to FIG. 5, an encoding module 124 may receive the message and the scaling factor, and reflect the scaling factor to the message, thereby transforming the message into the polynomial form.

In detail, the encoding module 124 may output the message as a polynomial, as expressed in Equation 11, if the encoding module 124 receives $\vec{m}=(m_j)_{0 \leq j < n/2} \in R^{n/2}$ and the scaling factor that is greater than or equal to 1.

$$[\text{Equation 11}]$$

$$m(X) = \tau^{-1}(\lfloor \Delta \cdot \vec{m} \rceil_{\tau(R')}) \in R'$$

Here, m(x) indicates the message in the polynomial form. This type of transformation may be referred to as the linear transformation.

In addition, an encryption module 125 may receive the message in the polynomial form and reflect the public key to the received message, thereby generating the homomorphic ciphertext. In detail, the encryption module 125 may generate the homomorphic ciphertext based on Equation 12 below.

$$[\text{Equation 12}]$$

$$\upsilon \cdot pk + (m + e_0, e_1)(\mathrm{mod}\ q_L)$$

Here, v indicates a selected element, and $e_0$ or $e_1$ indicates a selected error value.

A decryption module 126 may receive the ciphertext and the secret key to thus decrypt the ciphertext, thereby outputting the message including the error. In detail, if the input ciphertext is $ct=(e_0,e_1) \in R'^2_{ql}$ for example, the decryption module 126 may output a message such as $m'=e_0+e_1 \cdot s(mod\ ql)$. For example, the decryption module 126 may output a message such as $m=(m_j=\Delta^{-1} \cdot m(\zeta))_{0 \leq j < n/2} \in R^{n/2}$ if the message in the polynomial form satisfies $m(x) \in R'$.

Meanwhile, the message output by the decryption module 126 may be the message in the polynomial form, and a decoding module 127 may thus finally output the message based on the message output by the decryption module 126 and the scaling factor.

FIG. 6 is a diagram for describing the bootstrapping operation according to the present disclosure.

In detail, FIG. 6 shows the operation and bootstrapping process for two homomorphic ciphertexts 10 and 20. The term "bootstrapping" may also be expressed as bootstrapping or plaintext space expansion.

The homomorphic ciphertexts 10 and 20 may include approximate message regions 11 and 21, respectively. The approximate message regions 11 and 21 may include the message and errors $m_1+e_1$ and $m_2+e_2$ together.

The electronic device 100 may perform a specific operation using the two homomorphic ciphertexts 10 and 20 as input values.

An operational result ciphertext 30 may include an approximate message region 31 including an operation result $m_3+e_3$ of each approximate message. As an operation result becomes larger than the input value, the approximate message region may also become larger, thus reducing a remaining plaintext space 32. If this operation is performed multiple times, the remaining plaintext space 32 may eventually disappear or become smaller than a limit, thus making the operation impossible. If it is determined that this state is reached, the electronic device 400 may perform the bootstrapping operation.

It may be seen that in a bootstrapped ciphertext 40, an approximate message region 41 is constant and a plaintext space 42 is expanded.

In this way, the bootstrapping method may expand the plaintext space, thereby enabling continuous processing for operation to be performed on the homomorphic ciphertext.

However, the bootstrapping method requires an operation that transforms a coefficient into a slot, and the linear transformation operation that transforms the slot into the coefficient. However, the linear transformation may require a lot of operational resources.

However, as described above, if the secret key satisfies Equation 6, the rotation may be performed without the key switching, which may improve the operational speed. Meanwhile, it is possible to improve the operational speed by using the additional key switching described above based on a size of the modulus. A description of this configuration is provided below with reference to FIG. 9.

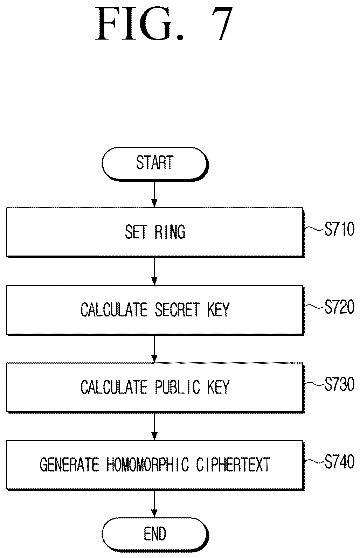

FIG. 7 is a flowchart for describing an encryption method according to the present disclosure.

First, the electronic device may set a ring, which is a set of polynomials having the predetermined coefficients (S710). In detail, in the ring, the addition and multiplication may be defined between the elements, and the ring may thus be closed under the addition and multiplication.

In addition, the electronic device may calculate the secret key from the ring (S720). In detail, the electronic device may calculate the secret key corresponding to the subring that belongs to the Galois subgroup of the ring and satisfies the predetermined condition (in detail, as expressed in Equation 6).

In addition, the electronic device may calculate the public key corresponding to the calculated secret key (S730). In detail, the electronic device may calculate the first random polynomial from the ring, extract the error, calculate the second random polynomial by performing the modular operation on the error in the calculated first random polynomial and the secret key, and calculate the public key by using the calculated first and second random polynomials.

In addition, the electronic device may generate the homomorphic ciphertext by applying the public key to the message (S740). In detail, the electronic device may encode the message into a polynomial belonging to the ring, and apply the public key to the encoded message, thereby generating the homomorphic ciphertext.

As described above, the encryption method according to this embodiment may generate the homomorphic ciphertext including the error, thus maintaining the stable security even for the biometric information or the like that requires the high security. In addition, the encryption method according to this embodiment may calculate and use the secret key satisfying the subring that is invariant with respect to the Galois subgroup to thus omit the key switching or the like during the linear transformation, thereby improving the operational speed.

Meanwhile, FIG. 7 shows that the single device performs the operations for generating the public key, the secret key, or the like and the operation for generating the ciphertext. However, in the implementation, different devices may perform the ring setup, the public key generation, the secret key generation, and the ciphertext generation using the generated public key. This case may additionally require transmission and reception operations for transmitting the public key described above.

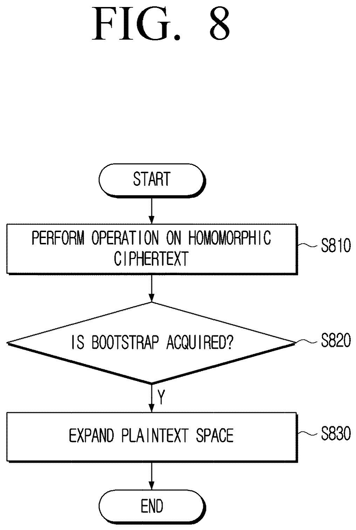

FIG. 8 is a flowchart for describing the bootstrapping operation according to the present disclosure.

Referring to FIG. 8, the electronic device may first perform the operation on the homomorphic ciphertext that encrypts the approximate message including the error (S810). As an example, the operation may be set as a basic operation such as multiplication, division, addition, subtraction, or the like, and is not necessarily limited thereto. In detail, if the encrypted message has a complex form, a conjugation operation may be performed thereon, and another operation such as statistics or sorting may also be performed thereon.

In addition, the electronic device may determine whether the approximate message weight in the operational result ciphertext acquired by the operation exceeds the threshold (S820). FIG. 8 shows that the electronic device determines whether the approximate message weight exceeds the threshold after the operation, and is not necessarily limited thereto. That is, the electronic device may also make a determination before the operation.

In addition, the electronic device may expand the plaintext space in the operational result ciphertext if the approximate message weight exceeds the threshold (S830). A detailed operation for expanding the plaintext space may be described below with reference to FIG. 9.

FIG. 9 is a flowchart for describing the operation for expanding the plaintext space according to the present disclosure.

Referring to FIG. 9, the electronic device may first expand the modulus of the operational result ciphertext (S910). As the modulus of the homomorphic ciphertext is expanded, a plaintext state of a homomorphic ciphertext ct may have a value of pt+ql. That is, if the modulus is expanded, the size of the error may thus also be expanded, which requires an operation described below to reduce the error.

The electronic device may switch the secret key of the homomorphic ciphertext, on which the first linear transformation is performed, to another secret key (S920). In detail, the electronic device may switch the first secret key of the homomorphic ciphertext, on which the first linear transformation is performed, to the second secret key corresponding to the subring and corresponding to the size of the modulus. Meanwhile, the description describes that the electronic device switches the secret key before performing the linear transformation with reference to FIG. 9. However, in implementation, the electronic device may switch the secret key after the linear transformation described below. In detail, after the first linear transformation described below, the dimension of the ring may be excessively high compared to its modulus. In this regard, the electronic device may perform the key switching on the homomorphic ciphertext by using the secret key corresponding to the dimension of the ring that matches a modulus level in advance, thereby improving the operational speed.

In addition, the electronic device may perform the first linear transformation on the homomorphic ciphertext whose secret key is switched into the polynomial form (S930). Here, a first linear transformation SlotToCoeff is an operation that transforms the homomorphic ciphertext form into a range to which the approximation algorithm is applied.

In detail, the electronic device may use a predefined matrix to perform the linear transformation on each coefficient in the polynomial into a form that is entered into the slot. Here, the predefined matrix may be a matrix that performs the linear transformation having a lower precision than a matrix used in the ciphertext generation process for the homomorphic ciphertext.

Here, the electronic device may perform the first linear transformation by reflecting the scaling factor to enable the homomorphic ciphertext whose modulus is expanded to have a predetermined range.

In addition, the electronic device may perform the approximation operation on the first homomorphic ciphertext, which is transformed into the polynomial form, by using the function set to approximate the modulated range of the plaintext (S940). The function set here may be a step function or a function satisfying a weighted Remez algorithm in which the step function is used as its weight. In detail, such a function may be a function defined as a difference between the homomorphic ciphertext transformed into the polynomial form and a polynomial equation set to enable the input values within the predetermined range of the ciphertext transformed into the polynomial form to approximate an integer point.

Meanwhile, the rotation operation may be frequently used in the approximation operation. Accordingly, as described above, the electronic device may perform the rotation operation without the key switching if the secret key of the homomorphic ciphertext is transformed into the secret key corresponding to the subring that is invariant with respect to the Gala subgroup. Therefore, the operational speed may be improved during the approximation operation described above.

The electronic device may perform the second linear transformation on each of the second homomorphic ciphertexts, on which the approximation operation is performed, into the homomorphic ciphertext form (S950). Here, the electronic device may perform the second linear transformation on the corresponding ciphertext by reflecting the scaling factor into the homomorphic ciphertext form. Here, the scaling factor may use a value different from the scaling factor used in the first linear transformation.

In addition, the electronic device may perform the key switching on the secret key of the homomorphic ciphertext on which the second linear transformation is performed (S960). In detail, if the key switching is performed before the first linear transformation, the electronic device may perform the key switching to have an original secret key.

Meanwhile, the method for processing a ciphertext according to the various embodiments described above may be implemented in the form of a program code for performing each step, and may be stored and distributed on a recording medium. In this case, a device including the recording medium may perform the encryption operation, the ciphertext processing operation, or the like described above.

The recording medium may be any of various types of computer-readable medium such as the ROM, the RAM, a memory chip, a memory card, an external hard drive, a hard drive, a compact disc (CD), a digital versatile disc (DVD), a magnetic disk, or a magnetic tape.

Although the present disclosure has been described hereinabove with reference to the accompanying drawings, the scope of the present disclosure is determined based on the claims described below and should not be construed as being limited to the embodiments and/or drawings provided above. In addition, it should be clearly understood that improvements, changes, and modifications apparent to those skilled in the art of the disclosure described in the claims are also included in the scope of the disclosure.

**Claims**

1. A method for processing a ciphertext, the method comprising:

setting a ring, which is a set in which addition and multiplication are defined between elements;
calculating a secret key corresponding to a subring that belongs to a Galois subgroup of the ring and satisfies a predetermined condition;
calculating a public key corresponding to the calculated secret key; and
generating the homomorphic ciphertext by applying the public key to the message.

2. The method as claimed in claim 1, wherein the predetermined condition is expressed as $O_K^H$,

where H indicates the Galois subgroup, K indicates $Q(\zeta)(\textit{where } \zeta = e^{2\pi j/(N)})$, and N indicates a degree of the ring.

3. The method as claimed in claim 1, further comprising switching the secret key of the homomorphic ciphertext to another secret key.

4. The method as claimed in claim 3, wherein in the switching of the secret key,

the key switching is performed on the secret key of the homomorphic ciphertext to a second secret key satisfying $O_K$ if a modulus of the homomorphic ciphertext is greater than or equal to a predetermined value, and
the key switching is performed on the secret key of the homomorphic ciphertext to a third secret key satisfying

$O_K^H$ if the modulus of the homomorphic ciphertext is less than the predetermined value.

5. The method as claimed in claim 1, further comprising:

performing an operation on the homomorphic ciphertext; and
expanding a plaintext space in the homomorphic ciphertext on which the operation is performed,
wherein the expanding of the plaintext space includes
expanding a modulus of the homomorphic ciphertext on which the operation is performed,
performing a first linear transformation on the homomorphic ciphertext whose modulus is expanded into a polynomial form,
switching the secret key of the homomorphic ciphertext transformed into the polynomial form to another secret key,
performing an approximation operation on the homomorphic ciphertext whose secret key is switched, and
performing a second linear transformation on the homomorphic ciphertext, on which the approximation operation is performed, into a ciphertext form.

6. The method as claimed in claim 5, wherein in the switching of the secret key,
a first secret key of the homomorphic ciphertext, on which the first linear transformation is performed, is switched to the second secret key corresponding to the subring and corresponding to a size of the modulus.

7. The method as claimed in claim 6, wherein the expanding of the plaintext space further includes switching the second secret key of the homomorphic ciphertext, on which the second linear transformation is performed, to the first secret key.

8. An electronic device comprising:

a memory for storing a message; and
a processor configured to generate a homomorphic ciphertext corresponding to the message,
wherein the processor is configured to
set a ring, which is a set in which addition and multiplication are defined between elements,
calculate a secret key corresponding to a subring that belongs to a Galois subgroup of the ring and satisfies a predetermined condition,
calculate a public key corresponding to the calculated secret key, and
generate a homomorphic ciphertext by applying the public key to the message.

9. The device as claimed in claim 8, wherein the predetermined condition is expressed as $O_K^H$,

where H indicates the Galois subgroup, K indicates $Q(\zeta)(\textit{where } \zeta = e^{2\pi j/(N)})$, and N indicates a degree of the ring.

10. The device as claimed in claim 8, wherein the processor is configured to switch the secret key of the homomorphic ciphertext to another secret key.

11. The device as claimed in claim 10, wherein the processor is configured to

perform the key switching on the secret key of the homomorphic ciphertext to a second secret key satisfying $O_K$ if a modulus of the homomorphic ciphertext is greater than or equal to a predetermined value, and

perform the key switching on the secret key of the homomorphic ciphertext to a third secret key satisfying $O_K^H$ if the modulus of the homomorphic ciphertext is less than the predetermined value.

12. The device as claimed in claim 8, wherein the processor is configured to

perform an operation on the homomorphic ciphertext,
expand a modulus of the homomorphic ciphertext on which the operation is performed,
perform a first linear transformation on the homomorphic ciphertext whose modulus is expanded into a polynomial form,
switch the secret key of the homomorphic ciphertext transformed into the polynomial form to another secret key,
perform an approximation operation on the homomorphic ciphertext whose secret key is switched, and
perform a second linear transformation on the homomorphic ciphertext, on which the approximation operation is performed, into a ciphertext form.

13. The device as claimed in claim 12, wherein the processor is configured to switch a first secret key of the homomorphic ciphertext, on which the first linear transformation is performed, to the second secret key corresponding to the subring and corresponding to a size of the modulus.

14. The device as claimed in claim 13, wherein the processor is configured to switch the second secret key of the homomorphic ciphertext, on which the second linear transformation is performed, to the first secret key.

15. A computer-readable recording medium storing a program for executing a method for processing a ciphertext, wherein the method includes:

setting a ring, which is a set in which addition and multiplication are defined between elements,
calculating a secret key corresponding to a subring that belongs to a Galois subgroup of the ring and satisfies a predetermined condition,
calculating a public key corresponding to the calculated secret key, and
generating the homomorphic ciphertext by applying the public key to the message.

# FIG. 1

200

```
FIRST
SERVER DEVICE
```

$Ct_1, Ct_2$ ↑    ↓ $Ct_1 + Ct_2$

10 ⌇ NETWORK

$Ct_1 + Ct_2$ →

300

```
SECOND
SERVER DEVICE
```

$Ct_1$ ↗    ↖ $Ct_2$

```
FIRST
ELECTRONIC DEVICE
```
. . .
```
SECOND
ELECTRONIC DEVICE
```
```
N-TH
ELECTRONIC DEVICE
```

100-1          100-2          100-n

# FIG. 2

100

110                120

| MEMORY | ⟷ | PROCESSOR |

# FIG. 3

# FIG. 4

$$(\Delta,\ \lambda,\ L) \longrightarrow \boxed{\text{Setup}} \longrightarrow \text{params} \longrightarrow \boxed{\text{KeyGen}} \longrightarrow (\text{pk},\ \text{sk})$$

121                                   122

# FIG. 5

$$\vec{m} \xrightarrow{\Delta} \boxed{\text{Ecd}} \xrightarrow{} \text{m(x)} \xrightarrow{\text{pk}} \boxed{\text{Ecd}} \xrightarrow{} \text{Ct} \xrightarrow{\text{sk}} \boxed{\text{Dec}} \xrightarrow{} \text{m'(x)} \xrightarrow{\Delta} \boxed{\text{Dcd}} \xrightarrow{} \vec{m}'(\simeq \vec{m})$$

124        125        126        127

# FIG. 6

# FIG. 7

```
            ( START )
                │
                ▼
┌─────────────────────────────┐
│          SET RING           │──── S710
└─────────────────────────────┘
                │
                ▼
┌─────────────────────────────┐
│     CALCULATE SECRET KEY     │──── S720
└─────────────────────────────┘
                │
                ▼
┌─────────────────────────────┐
│     CALCULATE PUBLIC KEY     │──── S730
└─────────────────────────────┘
                │
                ▼
┌─────────────────────────────┐
│ GENERATE HOMOMORPHIC CIPHERTEXT │──── S740
└─────────────────────────────┘
                │
                ▼
            (  END  )
```

# FIG. 8

START

PERFORM OPERATION ON HOMOMORPHIC CIPHERTEXT ~ S810

IS BOOTSTRAP ACQUIRED? ~ S820

Y

EXPAND PLAINTEXT SPACE ~ S830

END

# FIG. 9

```
                    START

                EXPAND MODULUS              ～ S910

               SWITCH SECRET KEY            ～ S920

   PERFORM LINEAR TRANSFORMATION ON HOMOMORPHIC  ～ S930
       CIPHERTEXT INTO POLYNOMIAL FORM

             APPLY APPROXIMATE MODULUS      ～ S940

           PERFORM LINEAR TRANSFORMATION    ～ S950

               SWITCH SECRET KEY            ～ S960

                     END
```

## INTERNATIONAL SEARCH REPORT

| | International application No. |
|---|---|
| | **PCT/KR2023/021556** |

| A. | CLASSIFICATION OF SUBJECT MATTER |
|---|---|

**H04L 9/00**(2006.01)i; **H04L 9/08**(2006.01)i; **H04L 9/30**(2006.01)i; **G06F 7/544**(2006.01)i; **G06F 7/72**(2006.01)i

According to International Patent Classification (IPC) or to both national classification and IPC

| B. | FIELDS SEARCHED |
|---|---|

Minimum documentation searched (classification system followed by classification symbols)

H04L 9/00(2006.01); G06F 17/10(2006.01); H04L 29/06(2006.01); H04L 9/28(2006.01); H04L 9/30(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 동형 암호문(Homomorphic encryption), 갈루아 링(Galois ring), 비밀 키(private key), 공개 키(public key)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2020-0087708 A (CRYPTO LAB INC.) 21 July 2020 (2020-07-21) See paragraphs [0007]-[0012], [0077], [0084], [0097], [0100]-[0115], [0129], [0161] and [0255] and figure 1. | 1,8,15 |
| Y | | 3,10 |
| A | | 2,4-7,9,11-14 |
| Y | KR 10-2021-0135075 A (SAMSUNG ELECTRONICS CO., LTD.) 12 November 2021 (2021-11-12) See paragraphs [0044]-[0046] and figures 3a-3b. | 3,10 |
| A | US 2015-0237019 A1 (RAYTHEON BBN TECHNOLOGIES CORP.) 20 August 2015 (2015-08-20) See paragraphs [0025]-[0040] and figure 7. | 1-15 |
| A | US 2011-0243320 A1 (HALEVI, Shai et al.) 06 October 2011 (2011-10-06) See paragraphs [0131]-[0175] and figures 3-7. | 1-15 |

| ✓ Further documents are listed in the continuation of Box C. | ✓ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **01 April 2024** | **01 April 2024** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
|---|
| **PCT/KR2023/021556** |

**C.    DOCUMENTS CONSIDERED TO BE RELEVANT**

| Category* | Citation of document, with indication, where appropriate, of the relevant passages | Relevant to claim No. |
|---|---|---|
| A | US 2013-0339722 A1 (KRENDELEV, Sergey et al.) 19 December 2013 (2013-12-19)<br>See paragraphs [0160]-[0163] and figure 1. | 1-15 |

**INTERNATIONAL SEARCH REPORT**
Information on patent family members

International application No.

**PCT/KR2023/021556**

| Patent document cited in search report | | | Publication date (day/month/year) | Patent family member(s) | | | Publication date (day/month/year) |
|---|---|---|---|---|---|---|---|
| KR | 10-2020-0087708 | A | 21 July 2020 | KR | 10-2382952 | B1 | 05 April 2022 |
| | | | | US | 2022-0092150 | A1 | 24 March 2022 |
| | | | | WO | 2020-145759 | A1 | 16 July 2020 |
| KR | 10-2021-0135075 | A | 12 November 2021 | CN | 113609495 | A | 05 November 2021 |
| | | | | US | 11575502 | B2 | 07 February 2023 |
| | | | | US | 2021-0344479 | A1 | 04 November 2021 |
| US | 2015-0237019 | A1 | 20 August 2015 | US | 9325671 | B2 | 26 April 2016 |
| US | 2011-0243320 | A1 | 06 October 2011 | CN | 102822816 | A | 12 December 2012 |
| | | | | CN | 102822816 | B | 20 January 2016 |
| | | | | GB | 2492698 | A | 09 January 2013 |
| | | | | GB | 2492698 | B | 27 December 2017 |
| | | | | JP | 2013-524277 | A | 17 June 2013 |
| | | | | JP | 5812300 | B2 | 11 November 2015 |
| | | | | US | 2015-0033033 | A1 | 29 January 2015 |
| | | | | US | 8861716 | B2 | 14 October 2014 |
| | | | | US | 9252954 | B2 | 02 February 2016 |
| | | | | WO | 2011-123418 | A1 | 06 October 2011 |
| US | 2013-0339722 | A1 | 19 December 2013 | EA | 201301077 | A1 | 30 May 2014 |
| | | | | RU | 2017-139315 | A | 08 May 2019 |
| | | | | US | 8925075 | B2 | 30 December 2014 |
| | | | | US | 9215219 | B1 | 15 December 2015 |

Form PCT/ISA/210 (patent family annex) (July 2022)